# EUROPEAN PATENT SPECIFICATION

(11) **EP 4 460 386 B1**
(45) Date of publication and mention of the grant of the patent: **08.07.2026**
(21) Application number: 23705452.3
(22) Date of filing: 04.01.2023
(51) Int. Cl.: A63G 31/00, G05B 23/02

(54) **SYSTEMS AND METHODS FOR VISUAL SCENE MONITORING**
SYSTEME UND VERFAHREN ZUR ÜBERWACHUNG VISUELLER SZENEN
SYSTÈMES ET PROCÉDÉS DE SURVEILLANCE DE SCÈNE VISUELLE

(30) Priority: 05.01.2022 US 202263296733 P; 29.12.2022 US 202218090932
(43) Date of publication of application: 13.11.2024
(73) Proprietor: Universal City Studios LLC, Universal City, CA 91608 (US)
(72) Inventor: JEROMIN, Aaron Chandler, Orlando, Florida 32819 (US); KRAUTHAMER, Akiva Meir, Orlando, Florida 32819 (US); SCHEINBERG, Jeremy Seth, Orlando, Florida 32819 (US); HERTZLER, Elam Kevin, Orlando, Florida 32819 (US)
(74) Representative: Keltie LLP
(86) International application number: PCT/US2023/010131
(87) International publication number: WO 2023/133151

(56) References cited:
- WO-A1-2015/179298
- WO-A1-2020/023669
- US-A1- 2021 041 885

## Description

### BACKGROUND

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Amusement parks and other entertainment venues contain experiences (e.g., ride vehicle experiences, animated figures (e.g., robotic characters), scenes, attractions and so on) to entertain park guests. As the experiences become more technologically advanced and complex, the components within the experience may benefit from more robust monitoring and maintenance to ensure the safety of the park guests and optimal or improved operation of the experience. As such, it is now recognized that it is advantageous to utilize a variety of sensors, machine learning, and multi-dimensional modeling techniques to enable faster anomaly detection, automated alerting, predictive maintenance, and dynamic correction with regard to the experience.

Document WO 2015179298 A1 describes a ride control system that includes a plurality of ride vehicles positioned within a course. Each of the vehicles includes a vehicle controller configured to control movement of a respective vehicle, a position tracking system configured to facilitate identification of a location of the respective vehicle, and a vehicle transceiver in communication with the vehicle controller. The ride control system includes a primary controller and transceiver in communication and a primary wireless network formed by the vehicle and primary transceivers to include at least the primary controller and the vehicle controller of each vehicle. The primary controller is configured to receive data indicative of the location of each vehicle from respective vehicles via the primary wireless network. The primary and vehicle controllers of each vehicle are configured to provide a control loop for each vehicle based on the data indicative of the location of each.

### SUMMARY

Certain embodiments commensurate in scope with the originally claimed subject matter are summarized below. These embodiments are not intended to limit the scope of the disclosure, but rather these embodiments are intended only to provide a brief summary of certain disclosed embodiments. Indeed, the present disclosure may encompass a variety of forms that may be similar to or different from the embodiments set forth below.

In an embodiment, a method of monitoring an amusement park experience may include receiving, via multiple sensors, multiple layers of first sensor data indicative of characteristics of the experience. The method may generate a profile of the experience based on the first sensor data, wherein the profile includes a baseline and a threshold indicating an acceptable range of the characteristics. The method may receive second sensor data and third sensor data via the multiple sensors. The method may determine, in response to identifying characteristics of the second sensor data that deviate from the baseline but do not exceed the threshold, that the experience is operating properly. The method may also, in response to identifying characteristics of the third sensor data that deviate from the baseline and exceed the threshold, perform a corrective action.

In an embodiment, a system may include a network and one or more communication hubs communicatively coupled with one another via the network. The system may also include a ride vehicle including one or more ride vehicle sensors, where the one or more ride vehicle sensors are communicatively coupled to at least one of the one or more communication hubs. Further, the system may include an animated figure, the animated figure including an actuator and an actuator sensor, wherein the actuator sensor is communicatively coupled to at least one of the one or more communication hubs. The system may also include a controller that may receive data from the one or more ride vehicle sensors and data from the actuator sensor via the one or more communication hubs. The controller may adjust the actuator and control the ride vehicle based on a discrepancy between a baseline relative value and a currently detected relative value of the data from the one or more ride vehicle sensors and the data from the actuator sensor.

In an embodiment, one or more tangible, non-transitory, computer-readable media is provided in accordance with the present disclosure. The one or more tangible, non-transitory, computer-readable media comprises instructions that, when executed by at least one processor, cause the at least one processor to receive, via multiple sensors, first sensor data indicative of characteristics of an amusement park experience. The processor may generate a profile of the amusement park experience based on the first sensor data, and the profile may include a baseline and a threshold indicating an acceptable range of the characteristics. The processor may receive a second sensor data and third sensor data via the multiple sensors and determine, in response to identifying characteristics of the second sensor data that deviate from the baseline but do not exceed the threshold, that the experience is operating properly. However, in response to identifying characteristics of the third sensor data that deviate from the baseline and exceed the threshold, the processor may perform a corrective action.

### BRIEF DESCRIPTION OF DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of an anomaly detection and monitoring system, in accordance with an aspect of the present disclosure;
FIG. 2 is a flowchart of a method for detecting an anomaly related to an experience and performing a corrective action utilizing the system of FIG. 1, in accordance with an aspect of the present disclosure;
FIG. 3 illustrates an experience in which the system of FIG. 1 may be utilized, in accordance with an aspect of the present disclosure;
FIG. 4 is a block diagram illustrating a system of unlinked localized sensor networks, in accordance with an aspect of the present disclosure; and
FIG. 5 is a block diagram illustrating a network of interconnected localized sensors and devices, in accordance with an aspect of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

Theme parks and other such entertainment venues are becoming increasingly popular. Further, immersive experiences within such entertainment venues are in high demand. In order to provide new and exciting experiences, attractions, such as ride experiences and scenes (e.g., visual shows including live action, animated figures, computer-generated imagery, and so on) have become increasingly complex, involving integration of lighting, sound, movement, interactive elements, visual media, and so on. Accordingly, the components within the attractions may benefit from more exhaustive and holistic monitoring and maintenance. Conventional monitoring and maintenance systems include disparate clusters or networks of sensors and a manual regimen of prescribed inspections by technicians. Such conventional systems may fail to detect certain maintenance and/or user experience issues due to human error, or may fail to detect maintenance and/or user experience issues due to a lack of automated monitoring (e.g., via sensors, cameras, and so on). As may be appreciated, a system utilizing a multifaceted, layered, globally-connected network of sensors, multidimensional models, and machine learning engines may effectuate a more robust, accurate, responsive, and intelligent monitoring and maintenance system for amusement park attractions.

In view of the foregoing, present embodiments are generally directed to a method and system for automated monitoring, anomaly detection, correction, mitigation, and/or predictive maintenance in theme park experiences. Specifically, present embodiments are directed to collecting, via a network of communicatively coupled sensors, data on a variety of aspects of and components within an experience, using machine learning to detect and/or predict quantitative and qualitative issues, dynamically addressing the anomaly and/or triggering an alert regarding the anomaly. Visual aspects, control features, audio, aspects of the animated figures, and monitoring and maintenance components and/or aspects are prepared in accordance with present techniques to provide multifaceted and layered monitoring and maintenance of the experience. Multifaceted and layered monitoring and maintenance provides robust and intelligent monitoring of the experience. Layering is achieved at least in part by utilizing a number of data sources or streams (e.g., audiovisual data, infrared data, social media data and so on) to detect, predict, and/or correct for subtle anomalies that may nevertheless impact the quality of a guest's enjoyment of the experience. Due to the complex nature of interactions between the guest and the experience, in some embodiments, control instructions from an artificial intelligence (AI) or machine learning engine may coordinate sensor data, equipment performance and the like to detect and address (e.g., correct or mitigate the effects of) an anomaly. Further, numerous and variable iterative routines are included to gradually improve aspects of the monitoring and maintenance system.

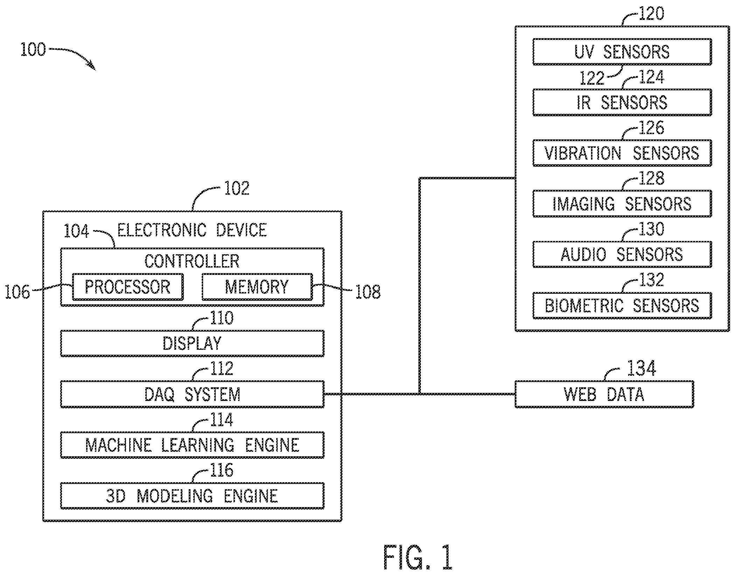

Procedures, in accordance with the present disclosure (applicable to procedures illustrated in FIGs. 1-5), for monitoring an amusement park experience include various different steps and procedural aspects. Some of these steps or procedures may be performed in parallel or in varying different orders. Some steps may be processor-based operations and may involve controlled equipment (e.g., actuators). Further, some procedures may be iteratively performed to achieve a desired outcome. Accordingly, while various different procedural steps may be discussed in a particular order herein, the procedural steps may not necessarily be performed in the order of introduction, as set forth by the present disclosure. While some specific steps of an operation may necessarily occur before other specific steps (e.g., as dictated by logic), the listing of certain orders of operation are primarily provided to facilitate discussion. For example, indicating that a first step or a beginning step includes a particular operation is not intended to limit the scope of the disclosure to such initial steps. Rather, it should be understood that additional steps may be performed, certain steps may be omitted, referenced steps may be performed in an alternative order or in parallel where appropriate, and so forth. However, disclosed orders of operation may be limiting when indicated as such.

FIG. 1 is a block diagram of an anomaly detection and monitoring system (e.g., the system) 100, in accordance with the present disclosure. As illustrated, the system 100 includes an electronic device 102, which may be in the form of any suitable electronic computing device, such as a computer, laptop, personal computer, server, mobile device, smartphone, tablet, wearable device, and so on. The electronic device 102 may include a controller 104 that includes one or more processors 106 and one or more memory and/or storage devices 108. The one or more processors 106 (e.g., microprocessors) may execute software programs and/or instructions (e.g., stored in the memory 108) to facilitate determining likelihoods and/or occurrences of changes in amusement experiences (e.g., relative to a baseline experience) and adjusting control accordingly. Moreover, the one or more processors 106 may include multiple microprocessors, one or more "generalpurpose" microprocessors, one or more special-purpose microprocessors, and/or one or more application specific integrated circuits (ASICs), or some combination thereof. For example, the one or more processors 106 may include one or more reduced instruction set (RISC) processors.

The one or more memory devices 108 may store information such as control software, look up tables, configuration data, and so on. In some embodiments, the one or more processors 106 and/or the one or more memory devices 108 may be external to the controller 104 and/or the electronic device 102. The one or more memory devices 108 may include a tangible, non-transitory, machine-readable-medium, such as a volatile memory (e.g., a random access memory (RAM)) and/or a nonvolatile memory (e.g., a read-only memory (ROM)). The one or more memory devices 108 may store a variety of information and may be used for various purposes. For example, the one or more memory devices 108 may store machine-readable and/or processor-executable instructions (e.g., firmware or software) for the one or more processors 106 to execute, such as instructions for determining a likelihood that an entertainment experience (e.g., automated positioning of an animated figure) will trend past a threshold or envelope of acceptable operation (e.g., due to wear, component failure, control degradation or the like) and adjusting operation or control features accordingly. The one or more memory devices 108 may include one or more storage devices (e.g., nonvolatile storage devices) that may include read-only memory (ROM), flash memory, a hard drive, or any other suitable optical, magnetic, or solid-state storage medium, or a combination thereof.

The electronic device 102 may also include an electronic display 110 that enables graphical and/or visual output to be displayed to a user. The electronic display 110 may use any suitable display technology, and may include an electroluminescent (ELD) display, liquid crystal (LCD) display, light-emitting diode (LED) display, organic LED (OLED) display, active-matrix OLED display, plasma display panel (PDP), quantum dot LED (QLED) display, and so on.

As illustrated, the electronic device 102 may include a data acquisition system (DAQ) 112 operable to send and receive information to and from a sensor network 120. For example, the electronic device 102 may include a communication interface that enables the controller 104 to communicate with servers and/or other computing resources of the sensor network 120 via a communication network (e.g., a mobile communication network, a WiFi network, local area network (LAN), wide area network (WAN), the Internet, and the like). In some cases, at least a portion of the information received from the sensor network 120 may be downloaded and stored on the memory or storage devices 108 of the electronic device 102. The sensor network 120 may include ultraviolet sensors 122, infrared sensors 124, vibration sensors 126, imaging sensors 128, audio sensors 130, biometric sensors 132, and so on. While the preceding list of sensors is illustrated in FIG. 1, it should be noted that any other appropriate sensor, such as an accelerometer, a speed sensor, a gyrometer, a torque sensor, a location sensor, a pressure sensor, a humidity sensor, a light sensor, voltage sensor, current sensor, humidity sensor, particle sensor, and so on may be employed in the system 100. Further, the illustrated sensors in FIG. 1 should be understood to represent any sensor type that can be utilized in an attraction.

The sensor network 120 may enable the system 100 to collect an expansive amount of data regarding an amusement park attraction, such that the system 100 may obtain a fine-grain view of the various aspects of and components within the system 100. For example, the infrared sensor 124 may detect if the wheels or motor of a ride vehicle are emitting heat beyond a heat threshold, and if so may trigger a warning (e.g., via the controller 104) to technical operators, disable the ride vehicle, or take any other appropriate action. Combinations of input may also be assessed using algorithms, lookup tables, or artificial intelligence. For example, data from the infrared sensor 124 may be analyzed in combination with the vibration sensors 126 to detect a cause of heat related to misalignment of wheels of a ride vehicle, or the like. The sensor network 120 may enable the system 100 to address quantitative and qualitative issues in an amusement park attraction. As used herein, quantitative issues may be defined as issues that can be quantified, counted, or measured. For example, a temperature sensor detecting that the temperature in a room is 85 degrees Fahrenheit when the expected temperature is 75 degrees Fahrenheit. In contrast, qualitative issues may be defined as issues regarding the appearance, sound, or feel of the experience or components within the experience, particularly as they relate to a guest's enjoyment of the experience.

For example, the sensor network 120 may enable the system 100 to address qualitative issues in the case that a lightbulb of a set of lightbulbs burns out during a show or scene, negatively impacting the quality of a user's experience. However, if a camera or other imaging sensor (e.g., 130) detects a difference, such as a deviation from a predetermined profile, in the lighting of a scene, the electronic device 102 may cause the brightness or direction of other lightbulbs in the set of lightbulbs to adjust to compensate for the malfunctioning lightbulb. The predetermined profile may be established by utilizing a machine learning engine (e.g., 114), as will be discussed in greater detail below. Further, the sensor network 120 may enable the system 100 to detect qualitative deviations such as a guest being in an area that the guest is not expected to be in. Upon making this determination, the system 100 may alert a technical operator or take other corrective action (e.g., stopping or pausing operation of the experience) or automatically perform such actions.

In addition to the sensor network 120, the DAQ 112 may collect web data 134 using software applications such as web crawlers to obtain information regarding anomalies or other issues within an attraction. For example, if a scene experiences an issue that may not be easily detected by a sensor (e.g., an animated character's wig falls off or the animated character experiences a costuming malfunction), a guest may notice the issue and post about the issue on social media. The DAQ 112 may detect, via the web crawler, the social media post and may trigger an alert.

Through utilization of one or more centralized processing servers (e.g., the electronic device 102), machine learning (ML) algorithms (e.g., executed via the ML engine 114) and anomaly detection algorithms, the system 100 may realize improvements in computer-related technologies by increasing the accuracy and efficiency of anomaly detection, predictive analysis, and intelligent maintenance in amusement park anomaly detection and maintenance systems. The sensor network 120 along with other data resources such as the web data 134 may provide a layered system of anomaly detection and maintenance. The sensors in the sensor network 120 may provide redundancy to ensure detection of anomalies that may go unnoticed in a conventional monitoring and maintenance system. For example, a spotlight in an attraction may be equipped with a current or voltage sensor allowing the system 100 to determine if an electrical issue is causing the spotlight to dim or turn off when considered in conjunction with other detected values (e.g., lighting level values in a staging area) provided to the system 100. An imaging sensor 128 may also be fixed upon an area illuminated by the light of the spotlight and the system 100 may be trained (e.g., via the ML engine 114) to detect luminance or brightness variations based on the imaging sensor 128. In this way, a lighting issue with the spotlight may be detected by the system 100 based on the current or voltage sensor, the imaging sensor 128, or combinations thereof.

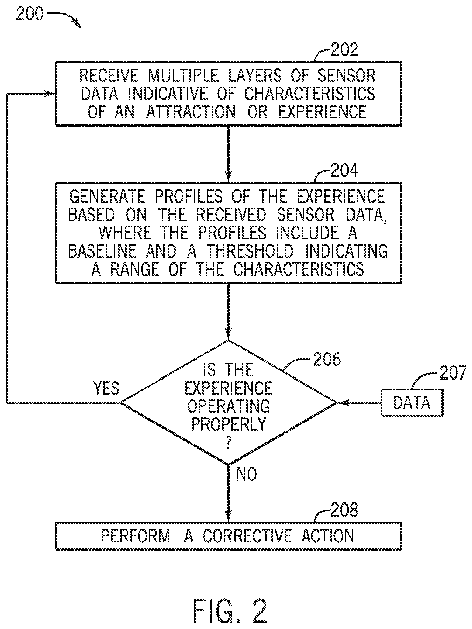

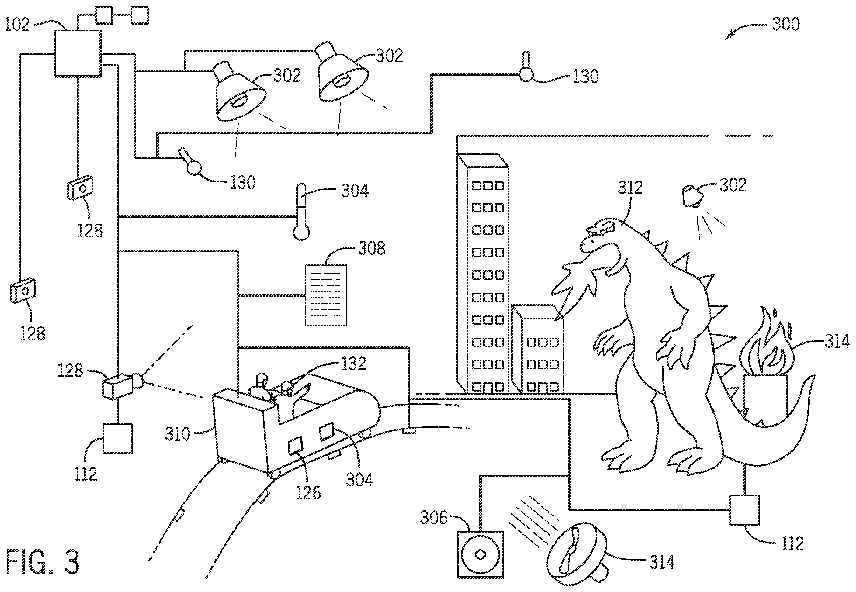

In some embodiments, the electronic device 102 may include the (ML) engine 114. While the ML engine 114 may be implemented outside of the controller 104 as illustrated in FIG. 1, in other embodiments the ML engine 114 may be implemented in other circuitry (e.g., in the controller 104, or in the processor 106). Turning to FIG. 2, a flowchart of a method 200 for detecting an anomaly related to an experience and performing a corrective action is illustrated, according to an embodiment of the present disclosure. In process block 202, the method 200 receives multiple layers of sensor data (e.g., from the sensor network 120) indicative of characteristics of the experience. The sensor data may include quantitative information, such as timing information regarding the activating of lights, audio equipment, and movement of the ride vehicle. The sensor data may also include qualitative information such as level of ambient lighting of an attraction or experience. Such information may be acquired from an attraction or an experience, such as that illustrated in FIG. 3.

FIG. 3 illustrates an attraction or an experience 300 in which the system 100 may be utilized, according to an embodiment of the present disclosure. The experience may feature a ride vehicle 310 equipped with a vibration sensor 126 and a temperature sensor 304, an animated figure 312, environmental components 314 (e.g., a fan to simulate wind blowing on the guests), audio equipment 306, set lights 302, an audio sensor 130, a temperature sensor 304, imaging sensors 128 (e.g., a camera or other imaging sensors), various DAQs 112 to collect and share data (e.g., over a network) with other sensors and electronic devices 102 (e.g., communication hubs), and so on. The animated figure 312 may have multiple actuators to enable movement of the animated figure 312. The actuators of the animated figure 312 may be equipped with various sensors such as torque sensors, pressure sensors, temperatures sensors, gyrometers, motion sensors, speed sensors, vibration sensors, infrared sensors, and so on. Additionally, the guests may wear biometric sensors 132 to permit monitoring and/or collecting of certain biometric data. While the sensors mentioned above are illustrated in the experience 300, it should be noted that any appropriate sensor may be included in the experience 300. For instance, the ride vehicle 310 may include any appropriate sensor (e.g., a motion sensor, a speed sensor, a weight sensor, a gyrometer, the temperature sensor 304, the vibration sensor 126, an accelerometer, or any combination thereof).

The electronic device 102, in particular the controller 104 of the electronic device 102, may receive data from various components (e.g., the ride vehicle 310, the animated character 312, the set lights 302, the environmental components 314, and so on) and/or may receive data from sensors of the sensor network 120 communicatively coupled to or otherwise monitoring the various components and/or conditions. The controller 104 may receive the data and adjust the actuators of the animated character 312, adjust lighting, adjust climate control, control effects, adjust airflow, control the ride vehicle 310, and the like (including combinations thereof). For example, the controller 104 may, based on the data received regarding the animated character 312, cause the actuators to adjust to make the animated character 312 move in a certain direction, look towards a particular guest or group of guests, or interact with elements of the experience 300. The controller 104 may, based on the data received regarding the ride vehicle 310, cause the ride vehicle 310 to speed up, slow down, stop, change direction, engage a hydraulic system of the ride vehicle 310, and so on. The controller 104 may adjust the set lights 302 (e.g., adjust position, brightness, color, and so on), control the environmental components 314, and so on.

In the process block 202 of the method 200, the experience 300 may undergo several cycles under normal operating conditions (e.g., as verified by a human technical operator) in order to obtain this data. For example, the cycling may include movement of a ride vehicle experience to determine proper triggering and response in order to verify that not only is the ride vehicle experience operating as per the original creative intent, but that the ride vehicle experience is responsive to the guest presence and/or precise location as intended. In this phase, the ML engine 114 may collect and train upon the data gathered through cycling to determine desired operating parameters of the experience. Upon collecting a sufficient amount of training data, the ML engine 114 may begin processing and labelling the data. In the processing and labelling phase, supervised and/or unsupervised machine learning will be performed by the ML engine 114. Based on the results of the processing and labelling phase, the ML engine 114 may determine and encode the parameters of a normally functioning experience.

The experience may be cycled repeatedly to enable the ML engine 114 to perform multiple layered processing passes, gradually learning additional aspects and parameters of the observed experience. For example, there may be a processing pass in which lighting color and intensity (e.g., detected via the imaging sensors 128 or features of the set lights 302) is learned and stored across the system 100. By sampling the experience 300 frame-by-frame over known time units, the system 100 may ascertain whether the set lights 302 are functioning properly to specification and are aimed as intended. The system 100 may detect anomalies such as flickering, outages, degradation or timing and triggering errors. Another processing pass may determine whether the animated figure 312, environmental components 314 and/or other action equipment are triggering properly, moving within expected motion profiles, and determine where and when motion is expected to appear under normal conditions.

Based on the information obtained in process block 202, the method 200 may, in process block 204, generate profiles of the experience 300 based on the received sensor data. The profiles may include a baseline and a threshold indicating an expected range of the characteristics or aspects of the experience 300. For example, a profile where the equipment in the experience 300 (e.g., the set lights 302, audio equipment 306, environmental components 314, and animated figure 312) is determined to operate according to specification and expectation may be designated as an A profile. However, a profile where the equipment in the experience 300 is determined to operate outside of specification and expectation, may be designated as a B profile. Additional profiles with different characteristics or operational aspects (e.g., a profile in warm weather or cold weather) may be designated as certain profile types (e.g., C profile, D profile, and so on) as well.

In query block 206, the method 200 may determine whether the experience 300 is operating properly according to specification and expectation. That is, data 207 from a current experience (e.g., essentially real time data from the experience 300) may be compared with established profiles established as part of the process block 204. Through the cycling and processing passes of the experience 300, profile thresholds may be determined outside of which the profile may receive a different designation, but within which a designation may remain even if deviation in the aspects and characteristics of the experience 300 are detected. For example, if during operation of the experience 300 the system 100 detects that the set lights 302 are dimmer than expected due to a technical error, the system 100 may determine this to be a deviation from the A profile, but not a deviation that exceeds the A profile threshold. Under these conditions, it may be determined in the query block 206 that the experience 300 is operating properly, and thus the method 200 may continue to receive sensor data indicative of characteristics of the experience 300 (e.g., in the process block 202). However, if the animated figure 312 experiences a technical issue that renders the animated figure 312 completely immobile, this may cause the profile of the experience 300 to be designated a B profile, C profile, and so on (e.g., beyond a threshold of the A profile and into a separate profile). Further, identification of the data 207 as corresponding to a non-optimal profile (e.g., B profile) may result in mere adjustment to operational aspects of the experience 300 while identification of the data 207 as corresponding to an unacceptable profile (e.g., profile X) may result is a shutdown of substantial operational aspects of the experience 300.

Depending on the parameters and boundaries designated by a user of the system 100, a B profile or C profile may be determined to be an improper operation of the experience 300, and thus, in process block 208, a corrective action may be determined and performed. The corrective action may include performing automated maintenance on malfunctioning equipment, such as having the controller 104, based on information received from the ML engine 114, send a command causing the experience 300 to adjust current to a malfunctioning set light 302 outputting less brightness than expected, or having the controller 104 send a command causing the experience 300 to adjust other equipment to account for malfunctioning equipment (e.g., adjusting the brightness of another set light 302 to compensate for the malfunctioning set light 302).

As previously discussed, the controller 104 may receive data from various components such as the ride vehicle 310 and/or the animated character 312 and adjust the actuators of the animated character 312 and/or control the ride vehicle 310 accordingly. Additionally or alternatively, the controller 104 may adjust the actuators of the animated character 312 and/or control the ride vehicle 310 based on the profile designation of the experience 300. For example, if the method 200 designates the profile of the experience 300 as an A profile, the controller 104 may cause the actuators to adjust to make the animated character 312 move in a certain direction, look towards a particular guest or group of guests, or interact with elements of the experience 300, and the controller may cause the ride vehicle 310 to accelerate at a particular location of the experience 300. However, if the method 200 designates the profile of the experience 300 as an X profile, the controller 104 may prevent the actuators from adjusting to move the animated character 312 and may prevent the ride vehicle 310 from accelerating-or may stop the ride vehicle 310-at the particular location of the experience 300.

The corrective action may also include sending an alert (e.g., to an alert panel 308) informing the technical operators of the malfunction. If the malfunction requires urgent action, the ML engine 114 may send an urgent alert to the technical operators and cause the experience 300 to stop or pause operation.

Through the method 200, the ML engine 114 may learn to identify known and new anomalies as well as anticipate anomalies that may occur in the future. For example, if the ML engine 114 determines that the set lights 302 gradually experience a reduction in brightness prior to a bulb burning out, the ML engine 114 may trigger an alert to the technical operators if the ML engine 114 detects that a set light 302 has gradually experienced a reduction in brightness, and may include in the alert an estimation of how long it may take for the bulb of the set light 302 to burn out. In this way, the system 100 may enable predictive maintenance within the experience 300 and may permit the technical operators to take corrective action prior to a malfunction, preserving the quality of the experience 300.

The system 100, through the ML engine 114, may also be able to apply the machine learning performed on the experience 300 to a different experience. The learned data from the experience 300 may be extrapolated and retargeted to another sufficiently similar experience by implementing a deep learning process known as transfer learning. Transfer learning allows for a sufficiently trained ML model to be repurposed and reused to make observations or predictions about a different but related problem set. For example, using the data learned about the operating characteristics of the set lights 302 in the experience 300, the ML engine 114 may be able to identify and anticipate issues that may be experienced by set lights in a different experience.

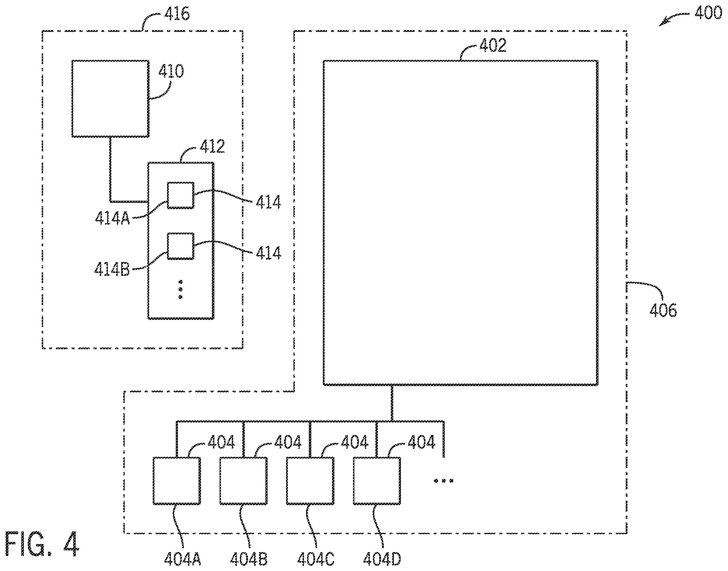

In certain embodiments, the system 100 and the experience 300 may utilize multiple localized sensor networks that are not linked together via a single network. FIG. 4 is a block diagram illustrating a system 400 of unlinked localized sensor networks, according to an embodiment of the present disclosure. Sensors 404A, 404B, 404C, and 404D (collectively referred to as the sensors 404) may be various sensors in the experience 300. These sensors may communicate data to a communication hub 402 (e.g., the electronic device 102). The communication hub 402 may receive sensor data (e.g., via the controller 104) and may analyze the sensor data from the sensors 404 (e.g., via the ML engine 114) and send commands (e.g., via the controller 104) to the sensors 404 or to other components within the experience 300. Additionally, the sensors 404 may communicate amongst themselves. The communication hub 402 and the sensors 404 may constitute a sensor network 406. Similarly, a communication hub 410 may receive signals from a device 412 (e.g., an electronic device (e.g., 102), and/or a controller (e.g., 104) communicatively coupled to the animated figure 312 or the ride vehicle 310) communicatively coupled to sensors 414A and 414B (collectively referred to as the sensors 414). The communication hub 10, the device 412, and the sensors 414 within the device 412 may constitute a sensor network 416. The communication hub 410 may communicate with the device 412 and the sensors 414, but may not communicate with the communication hub 402, thus the sensors network 416 may not communicate with the sensor network 406.

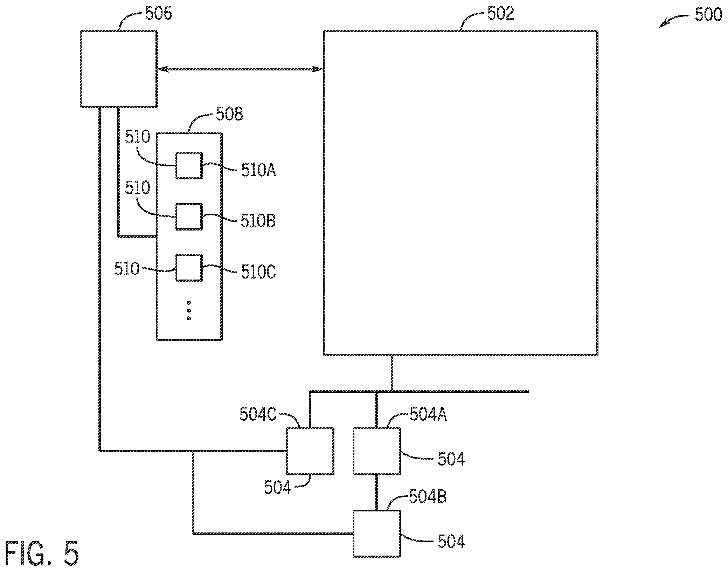

In contrast to FIG. 4, in certain embodiments the system 100 may utilize an interconnected system of localized sensor networks. As previously discussed, in certain embodiments the system 100 may utilize and report data to other systems within the experience 300. FIG. 5 is a block diagram illustrating a network 500 of interconnected localized sensors and devices, according to an embodiment of the present disclosure. In FIG. 5, a central communication hub 502 may collect data from and communicate with sensors 504A, 504B, and 504C (collectively referred to as the sensors 504 or network sensors). The sensors 504 may also communicate with each other. Certain sensors (e.g., 504A) may act as smaller communication hubs for other sensors (e.g., 504B), collecting information and sending commands to the other sensors. A local communication hub 506 may also collect data from the sensors 504 as well as from a device 508 equipped with a sensor 510A, a sensor 501B, and a sensor 510C, collectively referred to as the sensors 510 (or the device sensors 510). In this way, the device 508 and the sensors 510 within the device 508 may communicate with each other and with the sensors 504. The central communication hub 502 may also communicate with the local communication hub 506 via wired or wireless communication (e.g., WiFi, via a cellular network, and so on). While only one local communication hub 506 is shown, it should be understood that there may be any number of local communication hubs in the system 100. Further, a local communication hub may be assigned to an area of the experience 300, particular equipment of the experience 300 (e.g., the animated character 312), or a subsystem of particular equipment (e.g., a set of actuators within the animated character 312).

Utilizing the network 500, an issue detected in one sensor (e.g., 504B) in the network 500 may be communicated to other sensors (e.g., 504A, 504C, 510) in the network 500 as well as to other equipment (e.g., the device 508) such as controllers in the animated figures 312, the environmental components 314, and so on. For example, if a rise in temperature above a threshold is detected by the temperature sensor 304, the temperature sensor 304 may communicate the rise in temperature over the network 500, and the ML engine 114 may, via the controller 104, cause one or more fans to activate, may adjust a setting of a central air-conditioning unit, or may reduce the output of certain heat-producing elements within the experience 300.

With respect to FIGs. 4 and 5, the illustrated communication hubs 402 and 502 may incorporate artificial intelligence, controls, diagnostics, algorithms, lookup tables and combinations thereof to analyze and control aspects of the experience 300. These control features (e.g., artificial intelligence or learning algorithms) of the communication hubs 402 and 502 may be trained based on actual or virtual data. In certain embodiments, training data may be augmented with three-dimensional (3D) (e.g., via a 3D modeling engine 116) information about the experience 300 being observed. By informing the system 100 of the global positions of sensors in the sensor network 120 relative to known computer-aided or temporally changing 3D data, repositioning, removing, or adding additional sensors, devices, and other equipment may be permitted without retraining from certain observation angles. For example, given the pixel data of an image sensor 128 and knowledge of where particular pixels align with the 3D set, the image sensor 128 may be retrained from a new angle, shortening or eliminating the time normally required to add, remove, move or remount new image sensors. Thus, by using an interconnected network of sensors, devices, and equipment such as the network 500 depicted in FIG. 5 along with the transfer learning processes previously discussed and the 3D modeling engine 116, the system 100 may reduce or eliminate the time and/or processing power normally required in adding, removing, moving, and/or reconfiguring sensors, devices, and equipment.

Additionally, using the 3D modeling engine 116, the system 100 may be able to detect and correct certain positional errors of the equipment or sensors. For example, if the system 100 (e.g., via the ML engine 114) detects unexpected readings from an image sensor 128, one or more other image sensors 128 may observe the position of the problematic image sensor 128, compare the position to an expected position based on the global 3D model, determine that the problematic image sensor 128 is misaligned, and send feedback to the system 100, thereby enabling the system 100 to correct the position of the problematic image sensor 128. Indeed, the system 100 can be trained based on 3D modeling and/or operate using 3D modeling as a baseline template for comparison to ongoing data (e.g., essentially real-time data from an attraction or experience).

While only certain features of the disclosure have been illustrated and described herein, many modifications and changes will occur to those skilled in the art. The scope of the invention is defined by the appended claims. It should be appreciated that any of the features illustrated or described with respect to the figures discussed above may be combined in any suitable manner.

## Claims

1. A method for monitoring an amusement park experience, the method comprising:
receiving, via a plurality of sensors (120), multiple layers of first sensor data indicative of characteristics of the experience;
generating a profile of the experience based on the first sensor data, wherein the profile comprises a baseline and a threshold indicating an acceptable range of the characteristics;
receiving second sensor data and third sensor data via the plurality of sensors (120);
determining, in response to identifying characteristics of the second sensor data that deviate from the baseline but do not exceed the threshold, that the experience is operating properly; and
in response to identifying characteristics of the third sensor data that deviate from the baseline and exceed the threshold, performing a corrective action.

2. The method of claim 1, wherein the plurality of sensors (120) comprises a camera and/or other optical sensor, an audio sensor, a vibration sensor, an ultraviolet radiation sensor, a tactile sensor, a weight sensor, a motion sensor, a temperature sensor, a humidity sensor, or any combination thereof.

3. The method of claim 1, wherein the deviation comprises a qualitative deviation from the profile.

4. The method of claim 3, wherein the corrective action comprises:
A) triggering an alert notification; or
B) dynamically adjusting one or more components associated with the qualitative deviation in order to correct or mitigate a cause of the deviation.

5. The method of claim 1, wherein one or more sensors of the plurality of sensors (120) are disposed on and/or within:
A) a ride vehicle (310) of the experience; or
B) an animated figure (312) associated with the experience.

6. The method of claim 1, comprising using machine learning on the sensor data to detect quantitative and qualitative deviations from the profile of the experience.

7. The method of claim 6, comprising applying the machine learning from the experience to a second experience.

8. The method of claim 6, wherein a machine learning engine (114) is trained on a multi-dimensional model of the experience.

9. The method of claim 8, wherein the multi-dimensional model of the experience identifies a location of one or more sensors of the plurality of sensors (120) within the experience.

10. A monitoring system (100), comprising:
a plurality of sensors (120) configured to detect:
multiple layers of first sensor data indicative of characteristics of the experience;
second sensor data; and,
third sensor data;
a processor (106) configured to:
receive the first sensor data;
generate a profile of the experience based on the first sensor data, wherein the profile comprises a baseline and a threshold indicating an acceptable range of the characteristics;
receive the second sensor and third sensor data from the plurality of sensors;
in response to identifying characteristics of the second sensor data that deviate from the baseline but do not exceed the threshold, determine that the experience is operating properly; and
in response to identifying characteristics of the third sensor data that deviate from the baseline and exceed the threshold, perform a corrective action.

11. The monitoring system (100) of claim 10, wherein the plurality of sensors (120) comprises a camera and/or other optical sensor, an audio sensor, a vibration sensor, an ultraviolet radiation sensor, a tactile sensor, a weight sensor, a motion sensor, a temperature sensor, a humidity sensor, or any combination thereof.

12. The monitoring system (100) of claim 10, wherein the deviation comprises a qualitative deviation from the profile.

13. The monitoring system (100) of claim 12, wherein the corrective action comprises:
A) triggering an alert notification; or
B) dynamically adjusting one or more components associated with the qualitative deviation in order to correct or mitigate a cause of the deviation.

14. The monitoring system (100) of claim 10, wherein one or more sensors of the plurality of sensors (120) are disposed on and/or within:
A) a ride vehicle (310) of the experience; or
B) an animated figure (312) associated with the experience.

15. A tangible, non-transitory, computer-readable medium, comprising computer-readable instructions that, when executed by one or more processors of an electronic device (102), cause the electronic device (102) to carry out the method of any of claims 1 to 9.

## Patentansprüche

1. Verfahren zur Überwachung eines Vergnügungsparkerlebnisses, wobei das Verfahren Folgendes umfasst:
Empfangen, über eine Vielzahl von Sensoren (120), mehrerer Ebenen von ersten Sensordaten, die Charakteristika des Erlebnisses angeben;
Generieren eines Profils des Erlebnisses basierend auf den ersten Sensordaten, wobei das Profil eine Basislinie und eine Schwelle umfasst, die ein akzeptables Spektrum der Charakteristika angeben;
Empfangen zweiter Sensordaten und dritter Sensordaten über die Vielzahl von Sensoren (120);
Bestimmen, als Reaktion auf das Identifizieren von Charakteristika der zweiten Sensordaten, die von der Basislinie abweichen, aber die Schwelle nicht überschreiten, dass das Erlebnis ordnungsgemäß funktioniert; und
als Reaktion auf das Identifizieren von Charakteristika der dritten Sensordaten, die von der Basislinie abweichen und die Schwelle überschreiten, Durchführen einer Korrekturmaßnahme.

2. Verfahren nach Anspruch 1, wobei die Vielzahl von Sensoren (120) eine Kamera und/oder einen anderen optischen Sensor, einen Audiosensor, einen Vibrationssensor, einen Ultraviolettstrahlungssensor, einen Tastsensor, einen Gewichtssensor, einen Bewegungssensor, einen Temperatursensor, einen Feuchtigkeitssensor oder eine beliebige Kombination davon umfasst.

3. Verfahren nach Anspruch 1, wobei die Abweichung eine qualitative Abweichung von dem Profil umfasst.

4. Verfahren nach Anspruch 3, wobei die Korrekturmaßnahme Folgendes umfasst:
A) Auslösen einer Warnmeldung; oder
B) dynamisches Anpassen einer oder mehrerer Komponenten, die mit der qualitativen Abweichung assoziiert sind, um eine Ursache der Abweichung zu korrigieren oder zu vermindern.

5. Verfahren nach Anspruch 1, wobei ein oder mehrere Sensoren der Vielzahl von Sensoren (120) auf und/oder innerhalb von Folgendem angeordnet sind:
A) einem Fahrgeschäftsfahrzeug (310) des Erlebnisses; oder
B) einer animierten Figur (312), die mit dem Erlebnis assoziiert ist.

6. Verfahren nach Anspruch 1, das das Verwenden von Maschinenlernen an den Sensordaten umfasst, um quantitative und qualitative Abweichungen von dem Profil des Erlebnisses zu detektieren.

7. Verfahren nach Anspruch 6, das das Anwenden des Maschinenlernens von dem Erlebnis an einem zweiten Erlebnis umfasst.

8. Verfahren nach Anspruch 6, wobei eine Maschinenlernengine (114) an einem mehrdimensionalen Modell des Erlebnisses trainiert wird.

9. Verfahren nach Anspruch 8, wobei das mehrdimensionale Modell des Erlebnisses einen Ort von einem oder mehreren Sensoren der Vielzahl von Sensoren (120) innerhalb des Erlebnisses identifiziert.

10. Überwachungssystem (100), das Folgendes umfasst:
eine Vielzahl von Sensoren (120), die dazu konfiguriert sind, Folgendes zu detektieren:
mehrere Ebenen von ersten Sensordaten, die Charakteristika des Erlebnisses angeben;
zweite Sensordaten; und
dritte Sensordaten;
einen Prozessor (106), der zu Folgendem konfiguriert ist:
Empfangen der ersten Sensordaten;
Generieren eines Profils des Erlebnisses basierend auf den ersten Sensordaten, wobei das Profil eine Basislinie und eine Schwelle umfasst, die einen akzeptablen Bereich der Charakteristika angeben;
Empfangen der zweiten Sensordaten und dritten Sensordaten von der Vielzahl von Sensoren;
als Reaktion auf das Identifizieren von Charakteristika der zweiten Sensordaten, die von der Basislinie abweichen, aber die Schwelle nicht überschreiten, Bestimmen, dass das Erlebnis ordnungsgemäß funktioniert; und
als Reaktion auf das Identifizieren von Charakteristika der dritten Sensordaten, die von der Basislinie abweichen und die Schwelle überschreiten, Durchführen einer Korrekturmaßnahme.

11. Überwachungssystem (100) nach Anspruch 10, wobei die Vielzahl von Sensoren (120) eine Kamera und/oder einen anderen optischen Sensor, einen Audiosensor, einen Vibrationssensor, einen Ultraviolettstrahlungssensor, einen Tastsensor, einen Gewichtssensor, einen Bewegungssensor, einen Temperatursensor, einen Feuchtigkeitssensor oder eine beliebige Kombination davon umfasst.

12. Überwachungssystem (100) nach Anspruch 10, wobei die Abweichung eine qualitative Abweichung von dem Profil umfasst.

13. Überwachungssystem (100) nach Anspruch 12, wobei die Korrekturmaßnahme Folgendes umfasst:
A) Auslösen einer Warnmeldung; oder
B) dynamisches Anpassen einer oder mehrerer Komponenten, die mit der qualitativen Abweichung assoziiert sind, um eine Ursache der Abweichung zu korrigieren oder zu vermindern.

14. Überwachungssystem (100) nach Anspruch 10, wobei ein oder mehrere Sensoren der Vielzahl von Sensoren (120) auf und/oder innerhalb von Folgendem angeordnet sind:
A) einem Fahrgeschäftsfahrzeug (310) des Erlebnisses; oder
B) einer animierten Figur (312), die mit dem Erlebnis assoziiert ist.

15. Greifbares, nicht transitorisches, rechnerlesbares Medium, das rechnerlesbare Anweisungen umfasst, die, wenn sie durch einen oder mehrere Prozessoren einer elektronischen Vorrichtung (102) ausgeführt werden, verursachen, dass die elektronische Vorrichtung (102) das Verfahren nach einem beliebigen der Ansprüche 1 bis 9 vollführt.

## Revendications

1. Procédé de contrôle d'une expérience de parc de loisirs, le procédé comprenant :
recevoir, par le biais d'une pluralité de capteurs (120), de multiples couches de premières données de capteurs indiquant des caractéristiques de l'expérience ;
générer un profil de l'expérience en fonction des premières données de capteurs, le profil comprenant une base de référence et un seuil indiquant une plage acceptable des caractéristiques ;
recevoir des deuxièmes données de capteurs et des troisièmes données de capteurs par le biais de la pluralité de capteurs (120) ;
déterminer, en réponse à l'identification de caractéristiques des deuxièmes données de capteurs s'écartant de la base de référence mais ne dépassant pas le seuil, que l'expérience se déroule correctement ; et
en réponse à l'identification de caractéristiques des troisièmes données de capteurs s'écartant de la base de référence et dépassant le seuil, exécuter une action corrective.

2. Procédé selon la revendication 1, dans lequel la pluralité de capteurs (120) comprend une caméra et/ou un autre capteur optique, un capteur audio, un capteur de vibrations, un capteur de rayonnement ultraviolet, un capteur tactile, un capteur de poids, un capteur de mouvement, un capteur de température, un capteur d'humidité, ou une combinaison quelconque de ceux-ci.

3. Procédé selon la revendication 1, dans lequel l'écart comprend un écart qualitatif relativement au profil.

4. Procédé selon la revendication 3, dans lequel l'action corrective comprend :
A) déclencher une notification d'alerte ; ou
B) ajuster dynamiquement un ou plusieurs composants associés à l'écart qualitatif afin de corriger ou d'atténuer une cause de l'écart.

5. Procédé selon la revendication 1, dans lequel un ou plusieurs capteurs de la pluralité de capteurs (120) sont disposés sur et/ou dans :
A) un véhicule de manège (310) de l'expérience ; ou
B) une figure animée (312) associée à l'expérience.

6. Procédé selon la revendication 1, comprenant l'utilisation de l'apprentissage automatique sur les données de capteurs pour détecter des écarts quantitatifs et qualitatifs relativement au profil de l'expérience.

7. Procédé selon la revendication 6, comprenant l'application à une seconde expérience de l'apprentissage automatique associé à l'expérience.

8. Procédé selon la revendication 6, dans lequel un moteur d'apprentissage automatique (114) est entraîné sur un modèle multidimensionnel de l'expérience.

9. Procédé selon la revendication 8, dans lequel le modèle multidimensionnel de l'expérience identifie un emplacement d'un ou de plusieurs capteurs de la pluralité de capteurs (120) au sein de l'expérience.

10. Système de contrôle (100), comprenant :
une pluralité de capteurs (120) conçus pour détecter :
de multiples couches de premières données de capteurs indiquant des caractéristiques de l'expérience ;
des deuxièmes données de capteurs ; et
des troisièmes données de capteurs ;
un processeur (106) conçu pour :
recevoir les premières données de capteurs ;
générer un profil de l'expérience en fonction des premières données de capteurs, le profil comprenant une base de référence et un seuil indiquant une plage acceptable des caractéristiques ;
recevoir de la pluralité de capteurs les deuxièmes données de capteurs et les troisièmes données de capteurs ;
en réponse à l'identification de caractéristiques des deuxièmes données de capteurs s'écartant de la base de référence mais ne dépassant pas le seuil, déterminer que l'expérience se déroule correctement ; et
en réponse à l'identification de caractéristiques des troisièmes données de capteurs s'écartant de la base de référence et dépassant le seuil, exécuter une action corrective.

11. Système de contrôle (100) selon la revendication 10, dans lequel la pluralité de capteurs (120) comprend une caméra et/ou un autre capteur optique, un capteur audio, un capteur de vibrations, un capteur de rayonnement ultraviolet, un capteur tactile, un capteur de poids, un capteur de mouvement, un capteur de température, un capteur d'humidité, ou une combinaison quelconque de ceux-ci.

12. Système de contrôle (100) selon la revendication 10, dans lequel l'écart comprend un écart qualitatif relativement au profil.

13. Système de contrôle (100) selon la revendication 12, dans lequel l'action corrective comprend :
A) déclencher une notification d'alerte ; ou
B) ajuster dynamiquement un ou plusieurs composants associés à l'écart qualitatif afin de corriger ou d'atténuer une cause de l'écart.

14. Système de contrôle (100) selon la revendication 10, dans lequel un ou plusieurs capteurs de la pluralité de capteurs (120) sont disposés sur et/ou dans :
A) un véhicule de manège (310) de l'expérience ; ou
B) une figure animée (312) associée à l'expérience.

15. Support matériel, non transitoire, lisible par ordinateur, comprenant des instructions lisibles par ordinateur qui, lorsqu'elles sont exécutées par un ou plusieurs processeurs d'un dispositif électronique (102), amènent le dispositif électronique (102) à accomplir le procédé selon l'une quelconque des revendications 1 à 9.
